# EUROPEAN PATENT SPECIFICATION

(11) **EP 0 741 090 B1**
(45) Date of publication and mention of the grant of the patent: **05.01.2000**
(21) Application number: 96303008.5
(22) Date of filing: 30.04.1996
(51) Int. Cl.: B65G 47/08, B65B 35/44

(54) **Automated apparatus and method for consolidating products for packaging**
Verfahren und automatisierte Vorrichtung zum Verdichten von Produkten zur Verpackung
Procédé et appareil automatisé pour la consolidation de produits pour l'emballage

(30) Priority: 01.05.1995 US 432969
(43) Date of publication of application: 06.11.1996
(73) Proprietor: JOHNSON & JOHNSON VISION PRODUCTS, INC., Jacksonville, Florida 32216-0995 (US)
(72) Inventor: Edwards, Russell James, Jacksonville, Florida 32258 (US); Abrams, Richard Wayne, Jacksonville, Florida 32223 (US); Dolan, Mary Louise, Jacksonville, Florida 32250 (US); Lepper, John Mark, West Jacksonville, Florida 32257 (US); Wang, Daniel Tsu-Fang, Jacksonville, Florida 32225 (US); Funo, Masao, Kitakasushika-Gun., Saitaka-Pref. (JP)
(74) Representative: Mercer, Christopher Paul

(56) References cited:
- WO-A-87/02340
- DE-A- 3 333 884
- US-A- 2 771 177
- US-A- 3 708 947

## Description

### 1. Field of the Invention

The present invention relates generally to the field of manufacturing ophthalmic lenses, especially molded, hydrophillic contact lenses, and more specifically to an automated apparatus for consolidating contact lenses for packaging after inspection thereof.

### 2. Description of the Prior Art

Packaging equipment for glass or plastic containers is disclosed in U.S. Patent No. 3,708,974. This document discloses a consolidation apparatus in accordance with the preamble of appended Claim 1.

The molding of hydrophilic contact lenses is disclosed in U.S. Patent 4,495,313 to Larsen; U.S. Patent No. 4,640,489 to Larsen, et al.; U.S. Patent No. 4,680,336 to Larsen et al.; U.S. Patent No. 4,889,664 to Larsen et al.; and U.S. Patent No. 5,039,459 to Larsen et al., all of which are assigned to the assignee of the present invention.

These prior art references disclose a contact lens production process wherein each lens is formed by sandwiching a monomer or monomer mixture between a front curve (lower) mold section and back curve (upper) mold section, carried in a two by four mold array. The monomer is polymerized, thus forming a lens which is then removed from the mold sections and further treated in a hydration bath and packaged for consumer use.

U.S. Patent Nos. 5,080,839 and 5,094,609 disclose, respectively, a process for hydrating contact lenses and a chamber for hydrating contacts lenses formed with a monomer or monomer mixtures disclosed in the forgoing patents. The process disclosed in these patents significantly reduces the thruput time by hydrating the lens and releasing the lens from the mold cavity with deionized water and a small amount of surfactant without any salts, so that the time consuming ionic neutralization of the polymer from which the lens blank is made does not occur during the hydration process. When deionized water is used, the final step of the process is to introduce buffered saline solution into the final package with the lens and then seal the lens within the package so that the final lens equilibrium (ionic neutralization, final hydration and final lens dimensioning) is accomplished in the package at room temperature or during sterilization.

U.S. Patent No. 4,961,820, also assigned to the assignee of the present invention, discloses a final package for a contact lens, wherein the package is formed from a transparent plastic material such as polypropylene and a foil laminate that is heat sealed thereto.

While U.S. Patents 5,080,839 and 5,094,609 contemplate that the entire hydration process and transfer to final packaging may take place in a fully automated fashion, and while the chamber and process described in the foregoing patents enabled automated handling of the lens during hydration, suitable automated equipment to inspect and handle the lenses at high production rates and implement the methods thereof in a fully automated apparatus was not readily available or taught by the prior art.

### SUMMARY OF THE INTERVENTION

Recent developments in the inspection of contact lenses produced in accordance with the foregoing methods has enabled automated lens inspection, as taught in EP-A 0 605 171.

Further, recent developments in the hydration and automated handling of wet contact lenses, as taught in EP-A-0 686 488 (published on 13/12/95) has enabled automatic robotic handling of lenses during hydration, and prior to the inspection thereof by the automated lens inspection system.

The removal of lenses, that are out of product specification, from a serial product stream of contact lenses generates random variations in the product flow which must be consolidated prior to packaging.

The present invention therefore provides an apparatus according to Claim 1 for consolidating serial product flow wherein the product flow includes random variation in the flow. The present invention further provides an automated apparatus according to Claim 8 for receiving the serial products from the production line, and then consolidating random variations in the product flow. An automated robotic handling means then select a predetermined number and arrangement of product units and transports that number and arrangement to a subsequent packaging station for packaging, sterilization, and final shipment.

It is further an object of the present invention to provide a consolidation apparatus between two serial production operations, wherein the number and arrangement of product varies between input and output. The present invention enables use of a first x,y array of product units merging from a serial production line, and consolidating those product units into a second x,y array of units which corresponds to an array used in second production operation relating to the product.

It is further an object of the present invention to provide a programmable logic controller (hereinafter PLC) which maintains a status count for each of the individual products in the consolidation apparatus of the present invention, including a count for each random addition of product, and a separate count for each selection and transport of product from the consolidation apparatus to the final packaging station.

While the invention is described with particular reference to molded contact lenses wherein the lens has been molded between a first and second mold half, as described in EP-A-0 686 491 (published on 13/12/95). It is understood the present consolidation apparatus is equally suitable for the consolidation of lenses formed by lathe cutting wherein the hydrogel is maintained at a dry state while the desired optical surfaces are cut and polished.

Further, the apparatus of the present invention may also be used in consolidating spin cast lenses which subject a liquid monomer to centrifugal force in a mold which has the same shape as the desired optical surfaces of the lens.

An embodiment of the present invention is directed to the consolidation apparatus being longitudinally divided into identical sections, each section having its own set of first and second stop means, sensor means, alignment guides and said rail guide.

Another embodiment of the present invention is directed to the consolidation apparatus having at least two identical sections, each section having its own set of first and second stop means, sensor means, alignment guides and rail guides, and each having a second sensor, said second sensor being in transmittal communication with said controller and transmitting information with respect to the number of packages being conveyed in each section to said controller, and identifying a first section conveying fewer packages relative to a second section which in response thereto, said controller causes said first robotic device to transfer more packages to said first section relative to said second section until said first section conveys about an equal number of packages as said second section.

### BRIEF DESCRIPTION OF THE DRAWINGS

The foregoing objects and advantages of the present invention for an automated apparatus and method for consolidating products for packaging may be more readily understood by one skilled in the art with reference being had to the following detailed description of the preferred embodiments, taken in conjunction with the accompanying drawings, wherein like elements are designated by identical reference numerals throughout the several views, and in which:
Figure 1 is a diagrammatic illustration of plural robotic handling means, and a consolidation apparatus for removing random variations in product flow.
Figure 2 is a plan view of the consolidation apparatus of the present invention.
Figure 3 is an isometric view of a contact lens carrier which serves as both an inspection carrier, and a portion of the final contact lens package.
Figure 4 is an isometric view of an inspection carrier used to transport a plurality of the contact lens carriers illustrated in Figure 3 through the automated lens inspection system.
Figure 5 is a diagrammatic top view of the consolidation apparatus of the present invention, including guide and rail.
Figure 6 is a side view of the rail.
Figure 7a is a cross-section of the output area of the consolidation apparatus of Figure 2; Figure 7b is a side view of same.
Figure 8 is a cross-section of a second stop means in the consolidation apparatus of Figure 2.
Figure 9 is a cross-section of a first stop means in the consolidation apparatus of Figure 2.
Figure 10 is a cross-section of a sensor used in the consolidation apparatus of the present invention.

### DETAILED DESCRIPTION OF THE PREFERRED EMBODIMENTS

The present invention was designed for and is particularly adapted for use in the post hydration processing section of an automated contact lens production facility. Contact lenses molded in an automated production line, such as that described in EP-A-0 686 491; hydrated in a hydration system as described in EP-A-0 686 488 and automatically inspected as described in EP-A-0 604 179 are particularly well suited for consolidation and packaging by the present invention.

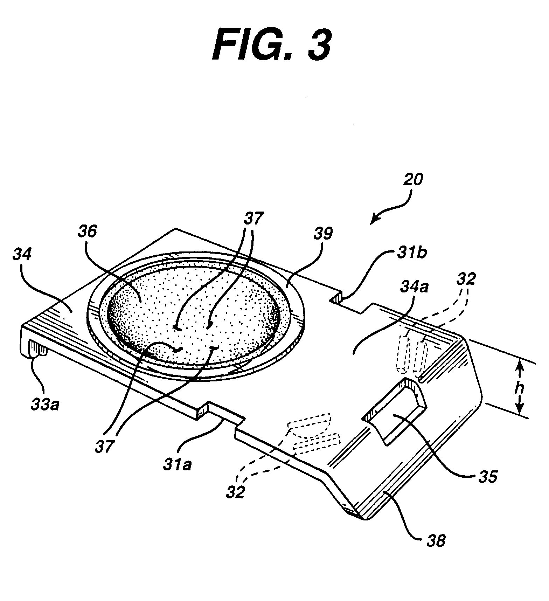

The present invention envisions a multipurpose disposable lens package carrier which transports a contact lens during inspection thereof, and serves as a portion of the final packaging after inspection. Package carrier 20 is illustrated in Figure 3 and is formed from injection molded or thermal formed plastic sheet material, such as polypropylene and includes a planar essentially rectangularly shaped base member 34 having an angularly depending wall portion 38 at one end thereof forming a first flange member and a pair of registration flanges 33(a), 33(b), one of which is visible in Figure 3, at the other end thereof which are used to align the package carrier for robotic handling. This package carrier is more fully described in EP-A-0 604 177.

Registration notches 31(a),(b) are provided on either side of the base 34 to cooperate with registration pins on various support pallets used in the processing and packaging operations to register the package carrier and lens for further handling or treatment. Offset from the center of the package is a cavity 36 integrally formed therein which is of an essentially semi-spherical configuration, generally in conformance with a curvilinear shape of a contact lens (not shown) which is adapted to be stored therein in a sealed condition while immersed in a suitable sterile aqueous solution in a manner similar to that described in U.S. Patent No. 4,691,820 to Martinez; which is assigned to the assignee of the present invention, the disclosure of which being incorporated herein by reference thereto. The height "h" of flange member 38 depending from the planar base member 34 is complimentary to the height or depth of cavity 36, and provides for self alignment of the package carrier in cooperation with depending flanges 33(a),(b) on specially configured pallet carriers, as will hereinafter be described. Depending flange 38 is also used in the final packaging of the product in cooperation with a plurality of generally "chevron-shaped" ridges 32, which will assist the end user in gripping the package while peeling open a foil laminate cover.

The cavity 36 also includes a plurality of tick marks 37 which are used to assist in holding a contact lens in the centered position in the cavity during the removal of deionized water at one of the post hydration processing stations. The package carrier is also equipped with an annular flange 39 which is used for heat sealing a foil laminate cover in order to provide a hermetic seal for the contact lens during final distribution. A cut-out 35 may optionally be provided to facilitate gripping the flange 38 and the package when the cover stock or foil laminate is removed for consumer usage.

Base member 34 also includes a smooth planar surface 34(a) to provide a suitable engagement zone for vacuum grippers on the upper side, and a vacuum rail on the lower side, which are used to transport the package carrier during various stages of the operation.

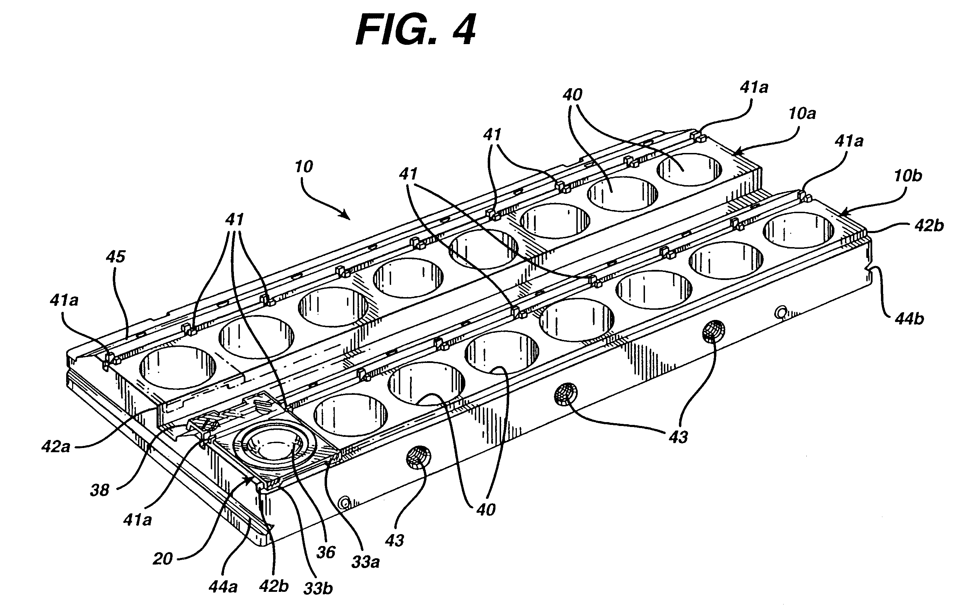

An inspection carrier for transporting the package carriers through the automated lens inspection system is illustrated in Figure 4. The inspection carrier 10 includes a first and second row 10(a), 10(b) of cavities 40 which receive the bowl 36 of the package carrier and provides an optical sight path for the automated lens inspection system. Each of the intermediate registration pins 41 engage a package carrier on either side, with the end registration pins 41(a) engaging a single package. These registration pins provide for precise registration of the package carrier in the longitudinal dimension of the inspection carrier while a pair of hard edges 42(a),42(b) provide a reference surface for the downwardly descending flanges 33(a),33(b), which together with pins 41 register the carrier package against rotational skewing. The inspection pallet 10 is further provided with three registration openings 43 on either side of the pallet which are used to transport the pallet through the automatic lens inspection station and to lock the pallet in place during loading and unloading of the package carriers. The inspection pallet is further provided with a pair of grooves 44(a),44(b) which provides a positive grip for an overhead transport mechanism that places and then removes the inspection pallet from the automatic lens inspection system. A pair of slanted faces 45 provides clearance for the downwardly descending flange member 38 of the package carrier 20.

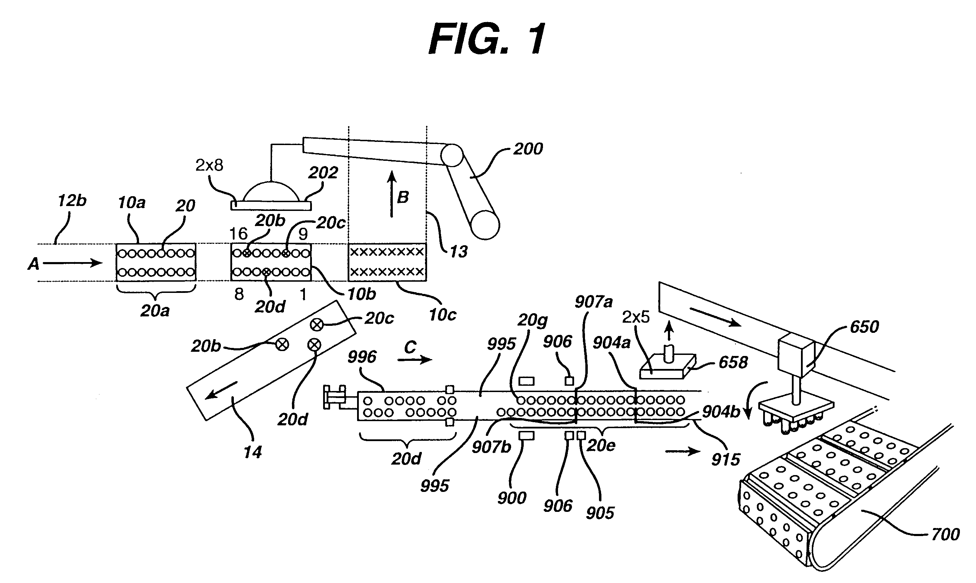

Figure 1 is a diagrammatic illustration of the automated apparatus of the present invention used to consolidate serial product flow when the serial product flow has random variations therein. While prefigured 2 X 8, 2 X 5 and 4 X 8 arrays are used in the description of the present invention, it is understood that a variety of arrays and configurations may be used in the practice of the invention described herein.

As illustrated in Figure 1, an inspection pallet 10 carrying sixteen product articles 20, arranged in a 2 X 8 array 20(a) is transported in the direction of arrow A from an automated inspection system that has separately reviewed each of the products 20 according to a predefined product criteria. Pallet 10 travels on a conveyor 12(b) through each of the three positions 10(a),(b) and (c) illustrated in Figure 1. After the products have been removed from the inspection pallet 10, as indicated in 10(c), the empty inspection pallets are returned via return conveyor 13 to be refilled with product.

A robotic handling device 200 is positioned adjacent conveyors 12, 13 and has mounted thereon a 2 X 8 vacuum array 202 having sixteen independently actuatable vacuum gripping means mounted thereon. Pallet 10(b) is conveyed along conveyor 12 to a predetermined product pick point, as illustrated in Figure 1 and the 2 X 8 array 202 is positioned thereabove to remove each of the sixteen products from the inspection carrier 10(b). As illustrated in Figure 1, products 20(b),(c) and (d) have been marked with an "X" to diagrammatically illustrate the removal of flawed or out spec products. In the practice of the present invention, a programmable logic controller ("PLC") is used to control the various elements of the present invention and receives a datablock from the automated inspection system having a flag set for each of the products 20(b), (c) and (d) that are flawed or out of spec.

After the products 20 have been removed from the inspection carrier 10(b), the robotic transfer device 200 positions the 2 X 8 array over conveyor belt 14 and selectively discharges the products 20(b), (c) and (d). Those products are then removed by conveyor 14 for subsequent destruction or recycling.

The robotic device 200 then places the remaining products on a consolidation buffer apparatus 995 with product array of 20(d). The products are placed on the input end 996. The product array of 20(d) includes gaps or random variations in the products flow resulting from the removal of the out of spec products 20(b), (c) and (d) from the serial product flow. The consolidation apparatus 995 includes a conveyor connected to actuating means which drives the conveyor. The conveyor runs underneath the products 20d and advances the packages from the input end 996 in the direction of arrow C to the output end 915.

The consolidation apparatus may be subdivided into several sections extending longitudinally from the input end 996 to the output end 915 each conveying its own stream of products. As shown in Figure 1, the consolidation apparatus is subdivided into two sections, each conveying its own set of products with random variations and each consolidating its own set of products in accordance with the description herein. Each section of the consolidation apparatus includes alignment means on the conveyor which align the packages, and each section has a rail mounted above the conveyor, which superposes over the packages and prevents shingling movement thereof. In addition, each section has a stop means, identified as 904(a) in one section and 904(b) in the second section. Each is mounted above the conveyor for vertical reciprocation, and when each is down, it blocks the advancement of the products to the output end 915. When each stop means 904(a) and 904(b) is blocking the advancement of the products, the lead products in each section stop its forward movement on the moving conveyor, and the products immediately behind it also stop their forward movement when they come in contact with the lead product. This process continues until eventually the gaps between a predetermined number of packages are filled and these packages are consolidated.

Both sections also have another stop means identified as 907(a) in the first section and 907(b) in the second section. These stop means 907(a) and 907(b) separate a predetermined number of packages from the remainder of the packages upstream in each section. These predetermined number of packages lie between 907(a) and 904(a) in the first section and 907(b) and 904(b) in the second section. In Figure 1, the predetermined number of packages is five, so that an array of five packages lie between the two stop means in each section.

The stop means 904(a) and 904(b) are coordinately raised so that a 2 X 5 array of packages are advanced to the output end 915. When these predetermined number of packages are advanced to the output end, stop means 904(a) and 904(b) are lowered so that no additional products can be advanced. Once a full array of lens packages are disposed in the output end, a second robotic assembly 650 equipped with an array 658 which contains ten vacuum gripping means in a 2 X 5 matrix is used to remove the packages from the output end 915 . The 2 x 5 array 658 is positioned over products 2Of and the vacuum gripping means is actuated to withdraw the first ten products to the saline solution injector and foil wrapper sealing assembly 700 where the packages are filled with saline solution and sealed with a foil wrapper.

The present application focuses on the consolidation apparatus which is described in greater detail hereinbelow. The steps outlined hereinabove, with respect to post-hydration, are described in greater detail in a copending EP- application (claimed priority from USSN 08/431 633 (Attorney reference number P15598EP).

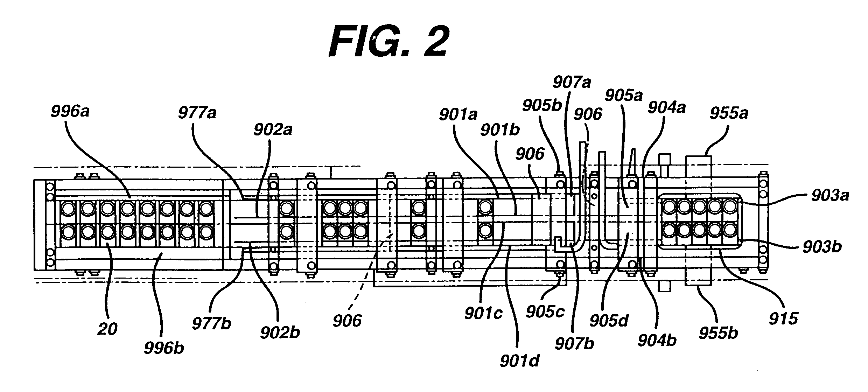

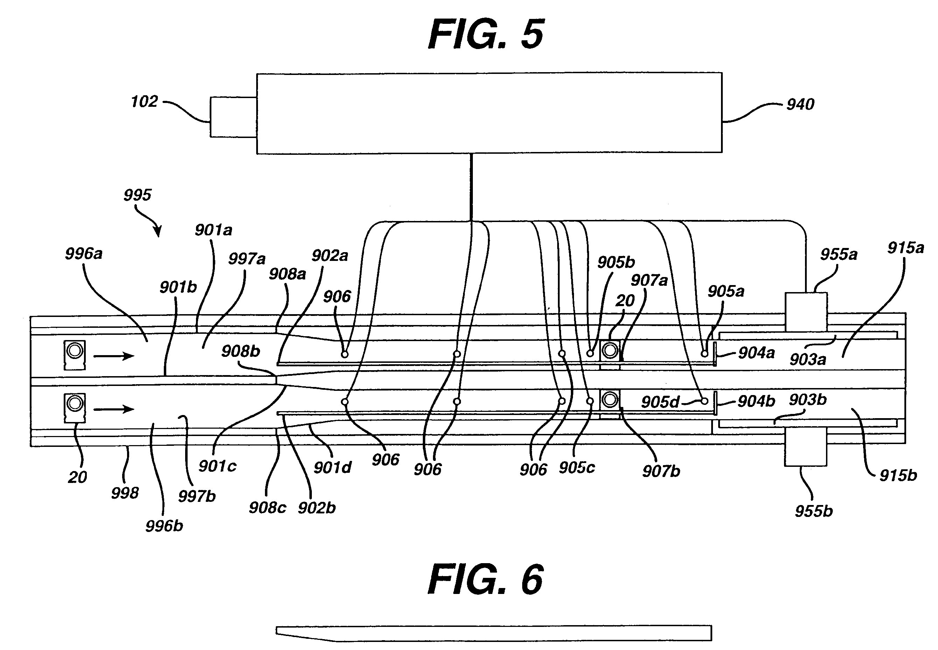

Focusing on the consolidation apparatus 995 reference is made to Figures 2 and 5 through 11. Reference is especially made to Figure 5, which represents a top view of the consolidation package.

Although the figures show two rows of the lens packages, represented by pallet 20 and identical sections of the consolidation apparatus having two sets of elements, it is to be understood that the embodiment is shown only for illustrative purposes, and that the consolidation apparatus may have any number of sections, each having all of the elements described herein.

The lens packages are deposited on a conveyor 998 at the input end, connected to a motor (not shown) which continually drives the conveyor and which advances the product array in the direction of the arrow illustrated in Figure 1.

Although any conveyor normally used in the contact lens manufacturing industry can be utilized, it is preferable that a belt conveyor be utilized. The conveyor is made up of material that is normally used in this art, taking into consideration the weight of all of the objects that rest on the conveyor during the process, the forces of friction between the moving parts, the speed of movement of the conveyor belt and the ability of the material to withstand the stress and/or tension created therefrom. Normally, the conveyor consists of a rubber or metal belt operating over a suitable drive (not shown) tail and bend terminals (not shown) and over belt idles or slide beds (not shown).

Each row of lens packages is transported by the conveyor. The conveyor 998 is divided into two parallel channels 997(a) and 997(b). One row of lens packages is conveyed downstream between guides 901(a) and 901(b), while the other row of lens packages is conveyed downstream between guides 901(c) and 901(d). These guides extend longitudinally down the conveyor from the input end 996 to the outward end 915. Inasmuch as there is no difference between the series of steps in each row, reference for purposes of discussion will refer to the conveyance of one set of products down just one of the channels.

At the input end 996(a) the distance between the upper guide 901(a) and lower guide 901(b) is longer than the length (and width) of each of the packages in order to provide ample space for the robotic deposit 200 to place the packages onto the conveyor belt. At a position downstream in the direction of flow, at 908(a) and 908(b), the guides become tapered relative to each other so that the lens packages fit perfectly therebetween as they are transported by the conveyor down the guides.

The tapered guides align the products in the array so that they are all facing the same direction and are all moving down the guides parallel to one another. The tapered guides also prevent lateral movement of the products.

In addition to the guides, there is a rail 902(a) which runs parallel to the conveyor and is mounted on a frame above the conveyor. Rail 902(a) longitudinally extends past a first stop means 907(a) to a second stop means 904(a), which is a partition to the output end 915. The rail 902(a) is a hold down bar which is superposed over the smooth planar surface 34(a) of the packages 20. When the packages slide under the rail, shingling movement, i.e., up-down movement, of the packages is prevented. A side view of rail 902(a) is shown in Figure 6.

Thus, the lens packages are transported along the conveyor between tapered guides 901(a) and 901(b) and under rail 902(a). As they slide downstream on the conveyor, they will pass a first stop means 907(a) which reciprocates perpendicular i.e., vertically, with respect to the movement of the packages on the conveyor.

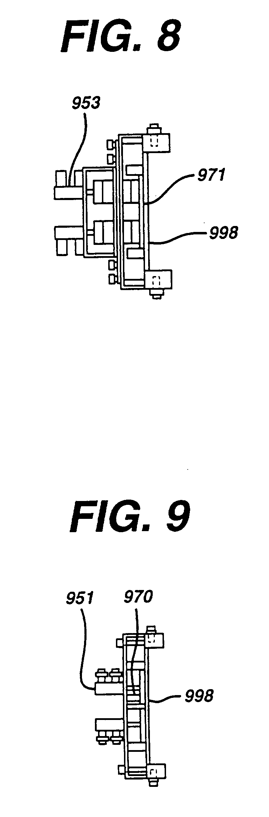

The first stop means is illustrated in Figure 9. It comprises a vertically aligned plate or rod 970 having one of its facial planes perpendicular to the axis of motion of the conveyor 995. The plate 970 is powered by a pneumatic cylinder 951. The selective actuation of said plate 970 causes it to be placed in the path of the advancing packages 20 on the conveyor 998, thereby preventing their movement downstream on the moving conveyor. As an illustrative example, when the first stop means 907(a) is in a first operative position, e.g., down, the packages cannot advance forward, even though the conveyor is still moving. On the other hand, when the first stop means 907(a) is up, the packages can advance forward on the moving conveyor. Thus, the first stop means 907(a) allows separation between adjacent packages, even when butted together.

In a preferred embodiment, the plate 970 is in the shape of a cylindrical pin that reciprocates vertically through the registration notices 31(a) and 31(b) of the contact lenses illustrated in Figure 3. Inasmuch as the contact lenses are extremely fragile and delicate, this mode of action is an unobtrusive means of preventing the advancement of the contact lens packages without damaging the lenses.

At a predetermined distance downstream is the second stop means 904(a) also known as a gate. In the embodiments shown in Figures 2 and 5, the distance between the first stop means and the second stop means is about the width of five contact lens packages. The second stop means 904(a) stops the advancement of the packages into the output end 915a.

A cross section of the seconds stop means is illustrated in Figure 8. It comprises a vertically aligned plate 971 having one of its facial planes perpendicular to the axis of motion of the conveyor 998. The plate 971 is powered by pneumatic cylinder 953. The selective actuation of the plate 971 causes it to be placed in the path of the moving packages 20 on the conveyor, thereby preventing the advancement of the packages to the output end 915a.

For purposes of illustration, when the second stop means 904(a) is down (i.e. the gate is closed) the packages cannot advance to the output end 915 on the moving conveyor. More specifically, when the second stop means 904(a) is down, the lead package cannot advance to the output means. This causes the second package to stop its downstream advancement when it comes into contact with the lead package. This, in turn, causes each of the packages upstream from the lead package to come into contact with the package in front of it. In this way, the packages are consolidated into a regular array, and the gaps become eliminated.

On the other hand, when the second stop 904(a) means is up (i.e., the gate is open), the packages proceed to the output area 915a wherein a 2 X 5 array of packages is removed by robotic assembly 650 to the saline solution injector and foil sealing assembly.

In reference to Figures 2 and 5, it is noted that the tapered guides 901(a) and 901(b) extend to the end of the conveyor, thus the packages remain aligned as they pass second stop means 904(a). However, the rail 902(a) does not extend past the second stop means 904(a). Therefore, in order to prevent the shingling of the packages in the output end 915(a), when the packages advance past the second stop means on the moving conveyor, hold down bars 903(a) in the output end actuate over the top of the packages before being carried by the second robotic assembly 650. When the robotic assembly 650 comes down to pick up the ten packages, the hold down bars 903(a) retract by actuating back, leaving the top of the packages exposed.

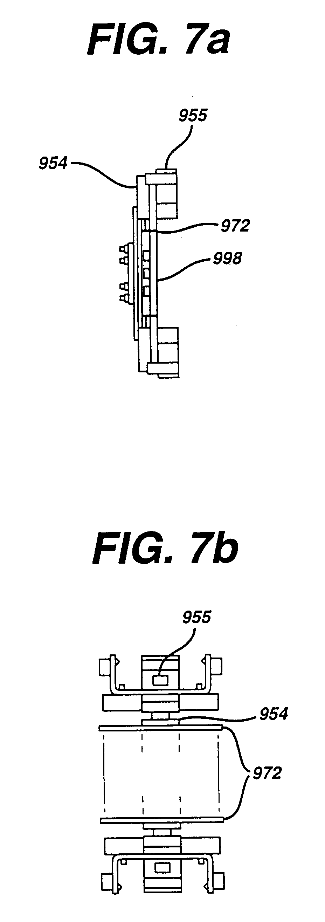

Figure 7(a) is a cross section of the output area, including the hold down bars 903(a) and 903(b) in the outer section. Figure 7(b) is a side view of the same. Each hold down bar is comprised of a plate 972 powered by a pneumatic cylinder 954 which causes the hold down bar to move or retract over the packages in the output area. The output area also contains a photosensor 955 which triggers a signal to the robotic assembly 650 through the PLC 940 to start removing the packages from the output area.

Thus, a typical cycle proceeds as follows. The packages on the consolidation apparatus have gaps therebetween and proceed down the moving conveyor to the second stop means 904(a), which blocks the advancement of the packages on the moving conveyor. First, the lead package is stopped, and the second package upstream therefrom is stopped when it comes into contact with the first package. The third package upstream stops its forward motion when it contacts the second package and this process continues, consolidating the packages on the moving conveyor 995. When a predetermined number of packages e.g., five packages, in the embodiment in Figure 5, are stopped by second stop means 904(a) first stop means 907(a) is actuated to separate the five packages between the first and second stop means 907(a) and 904(a), respectively from the remainder of the packages upstream. With the five packages between the two stop means, the second stop means 904(a) is released, allowing the packages to enter the output end 915(a). As they enter the output area, the 903(a) hold down bar actuates to come down and superpose over the top of the packages to prevent shingling thereof. As the last of the packages passes under the second stop means 904(a), the second stop means 904(a) is lowered thereby blocking the movement of any further packages to the output end.

As the packages between the first and second stop means proceeds to the output area, the packages upstream from the first stop means 907(a) initially do not move, thus creating a gap. When this gap is created, the first stop means 907(a) is actuated up and the packages move forward to second stop means 904(a), which, by this time, has been completely lowered to prevent any further advancement of packages. When five packages are stopped between first stop means 904(a) and 907(a), the second stop means 907(a) is actuated to block the passage of any more packages past it, thereby separating five packages from the remainder of the packages upstream. The cycle is then repeated.

Meanwhile, when the packages pass through the gate at the output end, photosensor 955 triggers a signal through the PLC 940 to lower robotic assembly 650 to transfer the packages in the output end to the next station. As the robotic assembly 650 is lowered, hold down bars 903(a) retracts and are actuated back leaving the tops of the packages exposed for the robotic assembly 650 to grab for transfer to the next station.

All of these activities described hereinabove are coordinated by PLC 940. It receives transmittal information of the presence of each of the packages from sensors means such as photo sensors 955a or 955b which are located at various locations mounted above the conveyor.

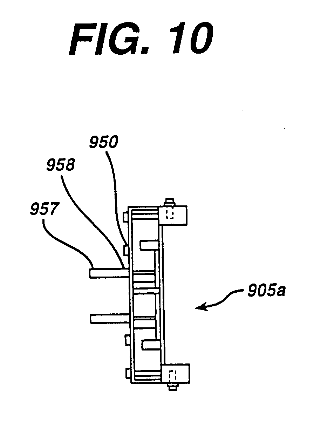

A cross section of a sensor means such as 905a is illustrated in Figure 10. It consists of a sensor 958 which is protected by a fiber protector 957 and mounted onto the rail by a fiber holder 956. The sensors utilized here are commercially available and are those that are normally used in this art. The sensors that are normally used are infrared sensors, although, as indicated hereinabove, sensor 955a is a photosensor. The sensor may be a reflective sensor as is commercially available from Omrom. Alternatively, the sensor could be a proximity sensor or a fiber optic probe, as commercially available from Keyence as Model 24W-V25R, used with an amplifier model 24W-AA1C.

Sensor means designated as 905(a),(b) are located behind the first stop means 907(a) and second stop means 904(a), respectively. They check to see if packages are present at the first and second stop means, respectively. If packages are stationary and block a sensor, a signal is triggered to PLC 940. When signals are triggered by both sensors means, 905(a) and 905(b) to PLC 940, it means that the packages have been consolidated between the two stoppers, 907(a) and 904(a). For purposes of illustration, assume that a signal is produced when the package blocks a sensor means and assume no signal is generated when there is a gap. Accordingly, if the sensor means 905(a) and 905(b) are blocked, a signal from both sensor means 905(a) and 905(b) is transmitted to PLC 940. PLC 940 coordinates the movement of the robotic transfer 650 at the output area with the opening of the second stop means 904(a) thus allowing the packages to proceed to the output area. When all of the packages between the stop means 905(a) and 907(a) pass to the output area 915(a), there will be a gap between the packages, wherein no signal is produced from sensor means 905(a) in front of stop means 904(a). As a result, PLC 940 commands the closing of the second stop means 904(a).

As the packages move through the second stop means 904(a) after a preset time, PLC 940 controls the removal of the first stop means 907(a), allowing the packages to proceed to the second stop means 904(a). However, because sensor means 905(a) triggers no signal after the fifth package entered the output end 915, these packages cannot proceed past the second stop means 904(a) which is closed. As the packages stop moving as they consolidate, and the sensor means 905(a) and 905(b) above both the first and second stop means 907(a) and 904(a), respectively, are blocked, then the first stop means 907(a) will be lowered and no more packages will advance past first stop means 907(a) and the whole process repeats itself.

The above description only referred to the disposition which respect to one stream of packages. However, as indicated hereinabove, the embodiment depicted in Figures 1, 4 and 5 depict two streams of packages being conveyed to the output end. The second stream has the same elements as the first stream described hereinabove, i.e. guides 901(c) and 901(d), which become tapered at 908(b), and 908(c), rail 902(b), first stop means 907(b) and second stop means 904(b), hold down bars 903(b) in the output area 915(b) and sensor means 905(c) and 905(d), located in front of the first stop means 907(b) and second stop means 904(b), respectively. Furthermore, the elements function like their counterparts described hereinabove.

However, inasmuch as there are two streams of products, there is an additional coordination which is controlled by PLC 940. As described hereinabove, each stream has five products between the first and second stop means, which are advanced to the output zone when the second stop means of the first stream 904(a) and the second stop means of the second stream 904(b) are raised. As also described, the second robotic assembly 650 transfers a 2 x 5 array to the next station. Therefore, the PLC 940 needs to coordinate the release of the two stop means 904(a) and 904(b). Thus, the stop means 904(a) and 904(b) are not raised until sensors 905(a), 905(b), 905(c) and 905(e) are blocked, and as a result, both means 904(a) and 904(b) are raised almost simultaneously so that the packages 20 pass the second stop means 904(a) and 904(b) in each stream, simultaneously, with each package in each stream being in the same corresponding position as its counterpart in the other stream. The hold down bars 903(a) and 903(b) actuate down to prevent shingling of the products as they pass into the output end 915(a) and 915(b), respectively. They are retracted simultaneously in coordination to the movement of the robotic assembly 650, which transfers the regular array of packages, (2 x 5) to the next station. Thus, the movement of all of these elements, the second stop means 904(a) and 904(b), the hold down has 903(a) and 903(b) and the robotic assembly 650 is controlled by PLC 940 which causes the movement of these elements to be in synchronization.

In embodiments, having more than one stream of products conveyed to the output end, there is a second coordination, which involve a second type of sensor 906.

The second type of sensor means marked 906 checks for the presence of packages 20 and are used in conjunction with the placement robot assembly zone from upstream to keep the two lines of packages equal. For instance, if three sensor means marked 906 were blocked on one side and only one of the sensor means marked 906 was blocked to the other side, the information would be relayed to PLC 940 which would cause the robot assembly 200 to place more packages on the conveyor into the stream having fewer packages. These sensor means are located at various positions above the conveyor in the consolidation apparatus. Although three are indicated in each section of the Figures, the consolidation apparatus may contain more or less. However, the consolidation apparatus requires the presence of at least two sensor means 906, one located in the vicinity of the first stop means 907 and another one located at a separate location on the consolidation apparatus.

PLC 940 referred to hereinabove, is part of a packaging contol system, which is described in EP-A-0 686 898 (published on 13/12/95).

The packing control system constitutes a PLC and associated circuitry and software, for providing the tracking and serial flow of products. Preferably, the PLC is a TI system 545 (Texas Instruments). The PLC is programmed with Application Productivity Tool (APT) software. The PLC is provided with a memory storage device 102 having adequate addressing and storage capabilities for PLC 940 to access and process data. As an illustration of how it works, the relationship between the sensor means 906 and the PLC 940 will be described. As indicated hereinabove, sensor means 906 for each section is in transmittal communication with the PLC 940. Each time a package blocks the sensor means 706 in one of the streams, it triggers a signal to the PLC 940. It counts the number of signals from the sensors 906 in each of the streams. PLC 940 has the computer capability to compare the values of the number of signals it receives from each stream, and determines the difference in value, respectively, between the total number of packages that are conveyed on one stream relative to the other stream. If the total number of packages that are conveyed on any one stream is greater than the total number of packages conveyed on the other stream, then PLC 940 commands robotic assembly 200 to place more packages on the section having the fewer number of packages. Additional packages are placed on the input portion of the conveyor belt having fewer number of packages until the number of signals received from the sensors 906 from both streams is about equal.

While the invention has been particularly shown and described with respect to the preferred embodiments thereof, it will be understood by those skilled in the art that the foregoing, and other changes in form and details, may be made therein without departing from the scope of the invention, which is limited only by the scope of the following claims.

## Claims

1. A consolidation apparatus (995) for consolidating a plurality of products (20) having random variations in product arrangement with gaps between the products (20), said apparatus comprising:
(a) a conveyor (998), said conveyor having an input end (996) and an output end (915), and said conveyor (998) receiving a plurality of products (20) with random variations in the arrangement thereof at said input end (996);
(b) means for actuating the conveyor (998) to transfer the products (20) from the input end (996) to the output end (915);
(c) alignment guides (901a, b, c, d) which longitudinally extend from the input end (996) up to and including the output end (915) of said conveyor (998) and which align the products (20) and prevent the lateral movement thereof;
(d) a first and second stop means (907a, b; 904a, b) mounted for vertical reciprocation perpendicular to the direction of conveyance of said products (20), said second stop means (904a, b) situated adjacent to the output area (915), and said first stop means (907a, b) situated at a predetermined distance in the direction of conveyance of the products (20) upstream of said second stop means (904a, b); said second stop means (904a, b) in one operative condition blocking the advancement of the products (20) to the output end (915) to consolidate any gaps between said products (20) and in another operative condition permitting the advancement of the products (20) to the output end (915), and said first stop means (907a, b) separating a predetermined number of products (20) located between the first and second stop means (907a, b; 904a, b) from the remainder of the products (20) upstream and which in an operative condition permits the advancement of the products (20) to the second stop means (904a, b) and in another operative condition blocks the advancement of said products (20) and
(e) a first sensor means (955) to actuate vertical reciprocation of said first and second stop means (907a, b; 904a, b);
characterized in that
a rail guide (902a, b) is mounted above said conveyor (998) which superposes above the products (20) moving on the conveyor (998) to prevent shingling of said products (20) as they move downstream to the output end (915);
each of said products (20) is a contact lens package carrier which comprises an essentially planar rectangularly shaped base member (34) having a pair of notches (31a, b) on the sides thereof and an angularly depending wall portion (38) at each end thereof forming flange members (33a, b), said base member (34) containing offset from the center a cavity (36) in the curvilinear shape of a contact lens and a planar surface (34a), the first stop means (907a, b) being insertable into one of said notches (31a, b); and
said rail guide superposes on the planar surface (34a) of said lens package carrier.

2. The consolidation apparatus (995) of Claim 1, wherein said actuating means is a motor.

3. The consolidation apparatus (995) of Claim 1 or Claim 2, wherein said first stop means (907a, b) is in the shape of a pin (970).

4. The consolidation apparatus (995) of Claim 1, Claim 2 or Claim 3, wherein said first sensor means (955) is an infrared sensor.

5. The consolidation apparatus (995) of any preceding Claim having a pair of sensor means (955a, b) situated on a frame above the conveyor (998) in front of said first and second stop means (907a, b; 904a, b).

6. The consolidation apparatus (995) of any preceding Claim, wherein said apparatus (995) includes at least two pairs of tapered alignment guides (901a, b, c, d), at least two rails (902a, b) adjacent and parallel to each other, at least two first and second stop means (907a, b; 904a, b) and at least two sensor means (995a, b).

7. The consolidation apparatus (995) of any preceding Claim which provides a consolidated regular array of products (20) at said output end (915), said product (20) arranged and positioned for robotic handling.

8. An automated apparatus for controlling the automatic packaging of contact lenses in a contact lens fabrication facility, said apparatus comprising:
a first robotic transfer device (200) for periodically transferring a first predetermined amount of packages (20) of contact lenses having random variation in product arrangement from a first station (10c) to the intermediate consolidation apparatus (995) of any preceding claim;
a consolidation apparatus (995) according to any preceding claim, wherein the first sensor means (955) is in transmittal communication with a controller (940) which communicates the presence of consolidation packages (20) directly in front of said first and second stop means (907a, b; 904a, b);
a second robotic assembly (650) for periodically transferring the second predetermined amount of individual packages (20) from said consolidation apparatus (995) to a second processing station (700), and
the controller (940) is in transmittal communication with said first and second stop means (907a, b; 904a, b) and said second robotic assembly (650), said controller (940) causing the actuation of the vertical reciprocation of the first and second stop means (907a, b; 904a, b) and coordinating said vertical reciprocation of the second stop means (904a, b) with the movement of said second robotic assembly (650).

9. The automated apparatus of Claim 8, wherein at least two streams of packages (20a, b) are advanced on said conveyor (998) which is longitudinally divided into at least two sections (996a, b), each section (996a, b) having a pair of parallel alignment guides (901a, b, c, d), a rail guide (902a, b) and a first and second stop means (907a, b; 904a, b) and a sensor (955a, b).

10. The automated apparatus of Claim 9, wherein each section (996a, b) additionally comprise a second sensor means which monitors the number of packages (20) in each section (996a, b), each second sensor being in transmittal communication with said controller (940) communicating the number of packages (20) in each section (996a, b), said controller (940) determining the difference of the number of packages (20) being conveyed in a section (996a) relative to a second section (996b), identifying a first section conveying fewer packages (20) relative to a second section, and causing said first robotic device (200) to transfer more packages (20) to said first section until the number of packages (20) conveyed in said first section contains about an equal number of packages (20) as in said second section.

11. The automated apparatus of any of Claims 8 to 10, wherein said first stop means (907a, b) is in the configuration of a cylindrical pin (970).

12. The automated apparatus of any of Claims 8 to 11 having a pair of first sensor means (955a, b) situated on a frame above the conveyor (998) directly in front of said first and second stop means (907a, b; 904a, b).

13. The automated apparatus of any of Claims 10 to 12, wherein said second sensor means (904a, b) is situated on a frame above the conveyor (998) directly in front of said first stop means (907a, b).

## Patentansprüche

1. Verdichtungsvorrichtung (995) zum Verdichten einer Vielzahl von Erzeugnissen (20) mit zufälligen Verteilungen in der Erzeugnisanordnung mit Zwischenräumen zwischen den Erzeugnissen umfassend:
a) einen Förderer (998) mit einem Eingabe-Ende (996) und einem Ausgabe-Ende (915), wobei der Förderer (998) an seinem Eingabe-Ende (996) eine Vielzahl von Erzeugnissen (20) mit zufälligen Variationen in der Anordnung aufnimmt;
b) eine Einrichtung zur Betätigung des Förderers (998), um die Erzeugnisse (20) vom Eingabe-Ende (996) zum Ausgabe-Ende (915) zu überführen;
c) Ausrichtungsführungen (901a, 901b, 901c, 901d), die sich in Längsrichtung vom Eingabe-Ende (996) des Förderers bis zu seinem Ausgabe-Ende (915) und dieses einschließend erstrecken, welche die Erzeugnisse (20) ausrichten und eine seitliche Bewegung derselben verhindern;
d) eine erste und eine zweite Stoppeinrichtung (907a, 907b, 904a, 904b), welche senkrecht zur Förderrichtung der Erzeugnisse (20) hin- und herbeweglich angebracht und in der Nähe des Ausgabe-Bereiches (915) gelegen sind, wobei sich die erste Stoppeinrichtung (907a, 907b) in einem vorgegebenen Abstand in bezug auf die Förderrichtung der Erzeugnisse (20) stromaufwärts von der zweiten Stoppeinrichtung (904a, 904b) befindet; die zweite Stoppeinrichtung (904a, 904b) in einem Betriebszustand den Vorschub der Erzeugnisse (20) zum Ausgabe-Ende (915) blockiert, um Zwischenräume zwischen den Erzeugnissen (20) zu verdichten und in einem anderen Betriebszustand den Vorschub der Erzeugnisse (20) zum Ausgabe-Ende (915) zuläßt und die erste Stoppeinrichtung (907a, 907b) eine vorgegebene Anzahl von Erzeugnissen (20), die sich zwischen der ersten und der zweiten Stoppeinrichtung (907a, 907b, 904a, 904b) befinden, vom Rest der stromaufwärts befindlichen Erzeugnisse (20) abtrennt sowie in einem Betriebszustand den Vorschub der Erzeugnisse (20) zur zweiten Stoppeinrichtung (904a, 904b) zuläßt und in einem anderen Betriebszustand den Vorschub der Erzeugnisse (20) blockiert und
e) eine erste Sensoreinrichtung (955), um die vertikale Hin- und Herbewegung der ersten und zweiten Stoppeinrichtung (907a, 907b, 90a, 904b) auszulösen;
dadurch gekennzeichnet, daß
über dem Förderer (998) eine Schienenführung (902a, 902b) montiert ist, welche auf den auf dem Förderer (998) bewegten Erzeugnissen (20) aufliegt, um ein Übereinanderschieben der Erzeugnisse (20) zu verhindern, wenn diese stromabwärts zum Ausgabe-Ende (915) bewegt werden;
jedes der Erzeugnisse (20) ein Kontaktlinsen-Verpackungsträger ist, welcher im wesentlichen aus einem ebenen rechteckigen Grundkörper (34) mit einem Paar Kerben (31a, 31b) an seinen Seiten sowie mit einem abgewinkelt herabreichenden, jeweils Flanschelemente (33a, 33b) bildenden Seitenabschnitt (38) an jedem seiner Enden besteht, wobei der Grundkörper (34) eine gegenüber der Mitte versetzte Vertiefung (36) mit der Krümmungsform einer Kontaktlinse sowie eine ebene Fläche (34a) aufweist und die erste Stoppeinrichtung (907a, 907b) in die Kerben (31a, 31b) einführbar ist und
die Schienenführung auf der ebenen Fläche (34a) des Linsen-Verpackungsträgers aufliegt.

2. Verdichtungsvorrichtung (995) nach Anspruch 1, bei welcher die Betätigungseinrichtung ein Motor ist.

3. Verdichtungsvorrichtung (995) nach Anspruch 1 oder 2, bei welcher die erste Stoppeinrichtung (907a, 907b) die Form eines Stiftes (970) hat.

4. Verdichtungsvorrichtung (995) nach Anspruch 1, 2 oder 3, bei welcher die erste Sensoreinrichtung (955) ein Infrarotsensor ist.

5. Verdichtungsvorrichtung (995) nach einem der bisherigen Ansprüche, bei welcher ein Paar von Sensoreinrichtungen (955a, 955b) an einem Rahmen über dem Förderer (998) vor den ersten und zweiten Stoppeinrichtungen (907a, 907b, 904a, 904b) angeordnet ist.

6. Verdichtungsvorrichtung (995) nach einem der bisherigen Ansprüche, bei welcher diese Vorrichtung (995) mindestens zwei Paare abgeschrägter Ausrichtungsführungen (901a, 901b, 901c, 901d), mindestens zwei benachbarte und untereinander parallele Schienen (902a, 902b), mindestens zwei erste und zweite Stoppeinrichtungen (907a, 907b, 904a, 904b) sowie mindestens zwei Sensoreinrichtungen (995a, 995b) aufweist.

7. Verdichtungsvorrichtung (995) nach einem der bisherigen Ansprüche, bei welcher eine verdichtete regelmäßige Anordnung von Erzeugnissen (20) am Ausgabe-Ende (915) vorgesehen ist, und diese Erzeugnisse (20) für die Roboter-Handhabung angeordnet und positioniert sind.

8. Automatische Vorrichtung zum Steuern der automatischen Verpackung von Kontaktlinsen in einer Kontaktlinsen-Herstellungseinrichtung, wobei die Vorrichtung umfaßt:
eine erste Roboter-Überführungseinrichtung (200) zum periodischen Überführen einer ersten vorgegebenen Menge von Verpackungen (20) von Kontaktlinsen mit einer zufälligen Verteilung der Erzeugnisanordnung von einer ersten Station (10c) zu einer zwischengeschalteten Verdichtungsvorrichtung (995) nach einem der bisherigen Ansprüche;
eine Verdichtungsvorrichtung (995) nach einem der bisherigen Ansprüche, in welcher die erste Sensoreinrichtung (995) in einer Übertragungsverbindung mit einer Steuerung (940) steht, welche die Anwesenheit zu verdichtender Verpackungen (20) unmittelbar vor der ersten und zweiten Stoppeinrichtung (907a, 907b, 904a, 904b) an die Steuerung überträgt;
eine zweite Roboter-Baugruppe (650) zur periodischen Überführung der zweiten vorgegebenen Menge einzelner Verpackungen (20) von der Verdichtungsvorrichtung (995) zu einer zweiten Bearbeitungsstation (700) und
wobei die Steuerung (940) in Übertragungsverbindung mit den ersten und zweiten Stoppeinrichtungen (907a, 907b, 904a, 904b) sowie mit der zweiten Roboter-Baugruppe (650) steht und wobei die Steuerung (940) die Betätigung der vertikalen Hin- und Herbewegung der ersten und der zweiten Stoppeinrichtung (907a, 907b, 904a, 904b) auslöst sowie die vertikale Hin- und Herbewegung der ersten und der zweiten Stoppeinrichtung (907a, 907b, 904a, 904b) mit der Bewegung der zweiten Roboter-Baugruppe (650) koordiniert.

9. Automatische Vorrichtung nach Anspruch 8, bei welcher mindestens zwei Stränge von Verpackungen (20) auf dem Förderer (998), der in Längsrichtung in mindestens zwei Abschnitte (996a, 996b) unterteilt ist, vorgeschoben werden, wobei jeder Abschnitt (996a, 996b) ein Paar paralleler Ausrichtungsführungen (901a, 901b, 901c, 901d), eine Schienenführung (902a, 902b), eine erste und eine zweite Stoppeinrichtung (907a, 907b, 904a, 904b) und einen Sensor (955a, 955b) aufweist.

10. Automatische Vorrichtung nach Anspruch 9, bei welcher jeder Abschnitt (996a, 996b) zusätzlich eine zweite Sensoreinrichtung umfaßt, welche die Anzahl der Verpackungen (20) in jedem Abschnitt (996a, 996b) überwacht, wobei jeder zweite Sensor mit der Steuerung (940) in Übertragungsverbindung steht und die Anzahl der Verpackungen (20) in jedem Abschnitt (996a, 996b) überträgt, und die Steuerung (940) die Differenz der Anzahl der Verpackungen (20), die in einem Abschnitt(996a) transportiert werden, relativ zu einem zweiten Abschnitt (996b) feststellt und einen ersten Abschnitt feststellt, der weniger Verpackungen (20) fördert als ein zweiter Abschnitt und schließlich die erste Roboter-Einrichtung (200) veranlaßt, mehr Verpackungen (20) in den ersten Abschnitt zu überführen, bis die Anzahl der im ersten Abschnitt beförderten Verpackungen (20) gleich der Anzahl der Verpackungen im zweiten Abschnitt ist.

11. Automatische Vorrichtung nach einem der Ansprüche 8 bis 10, bei welcher die erste Stoppeinrichtung (907a, 907b) die Anordnung eines Zylinderstiftes (970) ist.

12. Automatische Vorrichtung nach einem der Ansprüche 8 bis 11 mit einem Paar von Sensoreinrichtungen (955a, 955b), die an einem Rahmen über dem Förderer (998) direkt vor der ersten und zweiten Stoppeinrichtung (907a, 907b, 904a, 904b) angeordnet sind.

13. Automatische Vorrichtung nach einem der Ansprüche 10 bis 12, in welcher die zweite Sensoreinrichtung (904a, 904b) an einem Rahmen über dem Förderer (998) direkt vor der ersten Stoppeinrichtung (907a, 907b) angeordnet ist.

## Revendications

1. Appareil de consolidation (995) pour consolider une pluralité de produits (20) ayant des variations aléatoires concernant l'agencement de produits comportant des espaces vides entre les produits (20), ledit appareil comprenant :
(a) un convoyeur (998), ledit convoyeur ayant une extrémité d'entrée (996) et une extrémité de sortie (915), ledit convoyeur (998) recevant une pluralité de produits (20) avec des variations aléatoires concernant l'agencement de ces produits au niveau de ladite extrémité d'entrée (996) ;
(b) des moyens pour actionner le convoyeur (998) pour transférer les produits (20) depuis l'extrémité d'entrée (996) jusqu'à l'extrémité de sortie (915) ;
(c) des guides d'alignement (901a, b, c, d) qui s'étendent longitudinalement depuis l'extrémité d'entrée (996) jusqu'à et y compris l'extrémité de sortie (915) dudit convoyeur (998) et qui alignent les produits (20) en empêchant leur déplacement latéral ;
(d) des premiers et des seconds moyens d'arrêt (907a, b ; 904a, b) montés pour le mouvement vertical de va-et-vient perpendiculaire à la direction de transport desdits produits (20), lesdits seconds moyens d'arrêt (904a, b) étant situés adjacents à la zone de sortie (915), lesdits premiers moyens d'arrêt (907a, b) étant situés à une distance prédéterminée dans la direction de transport des produits (20) en amont desdits seconds moyens d'arrêt (904a, b) ; lesdits seconds moyens d'arrêt (904a, b) bloquant, dans un état de fonctionnement, l'avancement des produits (20) jusqu'à l'extrémité de sortie (915) pour consolider tout espace vide entre lesdits produits (20) et, dans un autre état de fonctionnement, permettant l'avancement des produits (20) jusqu'à l'extrémité de sortie (915), lesdits premiers moyens d'arrêt (907a, b) séparant un nombre déterminé de produits (20) placés entre les premiers et les seconds moyens d'arrêt (907a, b ; 904a, b) du reste des produits (20) en amont, premiers moyens d'arrêt qui, dans un état de fonctionnement, permettent l'avancement des produits (20) jusqu'aux seconds moyens d'arrêt (904a, b) et, dans un autre état de fonctionnement, bloquent l'avancement desdits produits (20), et
(e) un premier moyen formant capteur (955) pour déclencher le mouvement vertical de va-et-vient desdits premiers et seconds moyens d'arrêt (907a, b ; 904a, b) ;
caractérisé
en ce qu'un guide-rail (902a, b) est monté au-dessus dudit convoyeur (998), guide-rail qui se superpose au-dessus des produits (20) se déplaçant sur le convoyeur (998), pour empêcher le chevauchement desdits produits (20) à mesure qu'ils se déplacent en aval jusqu'à l'extrémité de sortie (915) ;
chacun desdits produits (20) est un support d'emballage pour lentilles de contact qui comprend un élément de base (34) pratiquement plat et de forme rectangulaire ayant une paire d'encoches (31a, b) sur les côtés de cet élément de base et une partie angulaire (38) formant un bord tombant au niveau de chaque extrémité de l'élément de base et formant des éléments en saillie (33a, b), ledit élément de base (34) contenant, décalée du centre, une cavité (36) dans la forme curviligne d'une lentille de contact et ayant une surface plane (34a), les premiers moyens d'arrêt (907a, b) pouvant être introduits dans une desdites encoches (31a, b) ; et
ledit guide-rail se superpose sur la surface plane (34a) dudit support d'emballage pour lentilles de contact.

2. Appareil de consolidation (995) selon la revendication 1, dans lequel ledit moyen d'actionnement est un moteur.

3. Appareil de consolidation (995) selon la revendication 1 ou 2, dans lequel lesdits premiers moyens d'arrêt (907a, b) ont la forme d'une goupille (970).

4. Appareil de consolidation (995) selon les revendications 1, 2 ou 3, dans lequel ledit moyen formant capteur (955) est un capteur infrarouge.

5. Appareil de consolidation (995) selon l'une quelconque des revendications précédentes, comportant une paire de moyens formant capteurs (955a, b) situés sur un bâti au-dessus du convoyeur (998) en face desdits premiers et seconds moyens d'arrêt (907a, b : 904a, b).

6. Appareil de consolidation (995) selon l'une quelconque des revendications précédentes, dans lequel ledit appareil (995) comprend au moins deux paires de guides d'alignement coniques (901a, b, c, d), au moins deux rails (902a, b) adjacents et parallèles entre eux, au moins deux premiers et seconds moyens d'arrêt (907a, b ; 904a, b) et au moins deux moyens formant capteurs (955a, b).

7. Appareil de consolidation (995) selon l'une quelconque des revendications précédentes, qui fournit un groupement régulier consolidé de produits (20) au niveau de ladite extrémité de sortie (915), ledit produit (20) étant agencé et positionné pour un traitement robotisé.

8. Appareil automatisé pour commander l'emballage automatique de lentilles de contact dans une unité de fabrication de lentilles de contact, ledit appareil comprenant :
- un premier dispositif de transfert robotisé (200) pour transférer périodiquement une première quantité prédéterminée d'emballages (20) de lentilles de contact ayant une variation aléatoire concernant l'agencement des produits, depuis une première station (10c) jusqu'à l'appareil de consolidation intermédiaire (995) selon l'une quelconque des revendications précédentes ;
- un appareil de consolidation (995) selon l'une quelconque des revendications précédentes, où le premier moyen formant capteur (955) est en communication de transmission avec un contrôleur (940) qui communique la présence d'emballages de consolidation (20) directement en face desdits premiers et seconds moyens d'arrêt (907a, b ; 904a, b) ;
- un second ensemble robotisé (650) pour transférer périodiquement la seconde quantité prédéterminée d'emballages individuels (20) depuis ledit appareil de consolidation (995) jusqu'à une seconde station de traitement (700), et
où le contrôleur (940) est en communication de transmission avec lesdits premiers et seconds moyens d'arrêt (907a, b : 904a, b) et avec ledit second ensemble robotisé (650), ledit contrôleur (940) provoquant le déclenchement du mouvement vertical de va-et-vient des premiers et des seconds moyens d'arrêt (907a, b : 904a, b) et coordonnant ledit mouvement vertical de va-et-vient des seconds moyens d'arrêt (904a, b) avec le déplacement dudit second ensemble robotisé (650).

9. Appareil automatisé selon la revendication 8, dans lequel au moins deux flux d'emballages (20a, b) sont avancés sur ledit convoyeur (998) qui est divisé longitudinalement au moins en deux sections (996a, b), chaque section (996a, b) ayant une paire de guides d'alignement parallèles (901a, b, c, d), un guide-rail (902a, b) et des premiers et des seconds moyens d'arrêt (907a, b ; 904a, b) et un capteur (955a, b).

10. Appareil automatisé selon la revendication 9, dans lequel chaque section (996a, b) comprend en plus un second moyen formant capteur qui contrôle le nombre d'emballages (20) dans chaque section (996a, b), chaque second capteur étant en communication de transmission avec ledit contrôleur (940) communiquant le nombre d'emballages (20) dans chaque section (996a, b), ledit contrôleur (940) déterminant la différence du nombre d'emballages (20) en cours de transport dans une section (996a) par rapport à une second section (996b), identifiant une première section transportant moins d'emballages (20) qu'une seconde section et faisant en sorte que ledit premier dispositif robotisé (200) transfère plus d'emballages (20) jusqu'à ladite première section, jusqu'à ce que le nombre d'emballages (20) transportés dans ladite première section soit un nombre d'emballages (20) à peu près égal à celui dans ladite seconde section.

11. Appareil automatisé selon l'une quelconque des revendications 8 à 10, dans lequel lesdits premiers moyens d'arrêt (907a, b) ont la configuration d'une goupille cylindrique (970).

12. Appareil automatisé selon l'une quelconque des revendications 8 à 11, ayant une paire de premiers moyens formant capteurs (955a, b) situés sur un bâti au-dessus du convoyeur (998) directement en face desdits premiers et seconds moyens d'arrêt (907a, b : 904a, b).

13. Appareil automatisé selon l'une quelconque des revendications 10 à 12, dans lequel desdits seconds moyens formant capteurs (904a b) sont situés sur un bâti au-dessus du convoyeur (998) directement en face desdits premiers moyens d'arrêt (907a, b).
